# EUROPEAN PATENT SPECIFICATION

(11) **EP 4 178 134 B1**
(45) Date of publication and mention of the grant of the patent: **16.10.2024**
(21) Application number: 21834267.3
(22) Date of filing: 01.07.2021
(51) Int. Cl.: H04L 9/40, G06F 16/182, H04L 67/06, H04L 67/1095, H04L 67/1097, H04L 67/289, H04L 67/564

(54) **DATA TRANSMISSION METHOD, PROXY SERVER, STORAGE MEDIUM, AND ELECTRONIC DEVICE**
DATENÜBERTRAGUNGSVERFAHREN, PROXY-SERVER, SPEICHERMEDIUM UND ELEKTRONISCHE VORRICHTUNG
PROCÉDÉ DE TRANSMISSION DE DONNÉES, SERVEUR MANDATAIRE, SUPPORT DE STOCKAGE ET DISPOSITIF ÉLECTRONIQUE

(30) Priority: 01.07.2020 CN 202010621938
(43) Date of publication of application: 10.05.2023
(73) Proprietor: ZTE Corporation, Shenzhen, Guangdong 518057 (CN)
(72) Inventor: QUAN, Rui, Shenzhen, Guangdong 518057 (CN); WEN, Yongxing, Shenzhen, Guangdong 518057 (CN); TANG, Wenbin, Shenzhen, Guangdong 518057 (CN); MA, Anwei, Shenzhen, Guangdong 518057 (CN)
(74) Representative: Novagraaf Technologies
(86) International application number: PCT/CN2021/104060
(87) International publication number: WO 2022/002209

(56) References cited:
- CN-A- 101 977 236
- CN-A- 105 100 263
- CN-A- 105 868 333
- CN-A- 110 120 917
- CN-B- 104 065 731
- US-A1- 2011 066 703

## Description

### Technical Field

Embodiments of the present invention relate to the technical field of 5G intelligent network file-following transmission, and in particular, to a data transmission method, a proxy server, a storage medium and an electronic apparatus.

### Background

The existing methods for supporting FTP file transmission mainly include the following:
A high-efficiency single-instance FTP server and a single FTP server, which efficiently support FTP file transmission by means of a local file system, NIO, etc.

According to the FTP distributed server, a plurality of FTP server instances can be expanded according to the scale to support a larger scale. According to the file sharing modes among multiple FTP server instances, there are mainly three types:
(1) Files are not shared;
(2) File sharing by means of file copying;
(3) Performing file sharing by means of a distributed file system, such as an NFS and a CEPH;

Generally, a network connectivity problem is solved by using an FTP reverse proxy, so as to ensure that a file can be transmitted between an FTP client and a non-direct FTP server.

However, with regard to the described method, since there is only one FTP server instance, the upper limit of the supporting capability is limited by the processing capability of the single instance, and cannot satisfy a large-scale multi-connection scenario, and the existing implementation of a multi-instance FTP server cannot well solve the problem of efficiency in a high concurrent connection scenario. The document CN 101 977 236, 20th May 2015 (2015-05-20), discloses a large files multipoint distribution system comprising a client, a central server, an upload server, and multiple task processing servers. The document CN 105 863 333, 17th August 2016 (2016-08-17), discloses a file processing method applied to a proxy server, which includes a unified interface module to handle file processing requests from third-party applications. The document CN 110 120 917, 13th August 2019 (2019-08-13), discloses a content-based routing method and device.

That is to say, in a data transmission process in the related art, a problem of low file transmission efficiency exists.

### Summary

Embodiments of the present invention provide a data transmission method, a proxy server, a storage medium, and an electronic apparatus, so as to at least solve the problem of low file transmission efficiency in the related art.

According to one embodiment of the present invention, a data transmission method is provided, including: receiving, by a proxy server, a target request sent by a client, wherein the target request is a viewing request or a transmission request, and the viewing request is used for requesting to view target attribute information about a target file in a data server, the transmission request is used for requesting to transmit a target file to the data server or to acquire the target file from the data server; in the case where the target request is a viewing request, the proxy server acquiring the target attribute information about the target file from a saved attribute information copy, and returning the target attribute information to the client, wherein the attribute information copy records a correspondence between a target file identifier of the target file and the target attribute information; in the case where the target request is a transmission request, the proxy server sending the target request to a target server in the data server, wherein the data server is a two-stack FTPServer multi-instance distributed cluster server, and the data server comprises a plurality of first servers. The proxy server records a range of processing FTP users reported by each of the first servers.

According to another embodiment of the present invention, there is provided a proxy server, including: A receiving unit, configured to receive a target request sent by a client, wherein the target request is a viewing request or a transmission request, the viewing request is used for requesting to view target attribute information about a target file in a data server, and the transmission request is used for requesting to transmit the target file to the data server or acquiring the target file from the data server; a first acquiring unit, configured to, in the case where the target request is a viewing request, acquire the target attribute information about the target file from a saved attribute information copy, and return same to the client, wherein the attribute information copy records a correspondence between a target file identifier of the target file and the target attribute information; a first sending unit, configured to send the target request to a target server in the data server in the case where the target request is a transmission request, wherein the data server is a two-stack FTPServer multi-instance distributed cluster server, and the data server comprises a plurality of first servers. The proxy server records a range of processing FTP users reported by each of the first servers.

According to another embodiment of the present invention, a computer readable storage medium is also provided. The computer readable storage medium stores a computer program, wherein the computer program is configured to execute the steps in any one of the method embodiments when running.

According to another embodiment of the present invention, also provided is an electronic device, including a memory and a processor, wherein the memory stores a computer program, and the processor is configured to run the computer program so as to execute the steps in any one of the method embodiments.

### Brief Description of the Drawings

Fig. 1 is a hardware structure block diagram of a mobile terminal for a data transmission method according to an embodiment of the present invention;
Fig. 2 is a flowchart of a data transmission method according to an embodiment of the present invention;
Fig. 3 is a schematic diagram of architecture and flow of a data transmission method according to an embodiment of the present invention;
Fig. 4 is a flowchart of offloading and addressing of a data transmission method according to an embodiment of the present invention;
Fig. 5 is a flowchart of a distributed coordination algorithm of a data transmission method according to an embodiment of the present invention;
Fig. 6 is a schematic diagram of distributed FTP cluster affinity and HA of a data transmission method according to an embodiment of the present invention;
Fig. 7 is a structural block diagram of a proxy server according to an embodiment of the present invention.

### Detailed Description of the Embodiments

Embodiments of the present invention will be described below in detail with reference to the accompanying drawings and in conjunction with embodiments.

It should be noted that, terms such as "first" and "second" in the description, claims, and accompanying drawings of the present invention are used to distinguish similar objects, but are not necessarily used to describe a specific sequence or order.

### File transfer

File transfer is a common technology, and in a scenario of a 5G intelligent network, file transfer is ubiquitous. For example, for a southbound network element, due to a 5G massive access feature, the number of access network elements greatly increases. File transfer is a common technology in element performance management and version management. Since security can be ensured from an access network element physical network, a simple and efficient file transfer protocol (FTP) server becomes a reasonable choice for file transmission, and massive access network elements trigger a large number of FTP concurrent connection requests. Meanwhile, the 5G low-delay intelligent network further requires the FTP to achieve high efficiency of file transmission while supporting massive connections.

### Distributed cluster

Distributed means that a plurality of systems cooperate with each other to accomplish a specific task. Distributional is to solve the problem of centralized management, and it is too slow to superimpose all tasks to one node for processing. Hence, one big problem is divided into a plurality of small problems which are solved separately and finally cooperated. The main task of the distributed system is to decompose the functions. The main usage scenario of the cluster is to share the pressure of a request, that is, to deploy the same application program on several servers to share the request of the client.

### FTP reverse proxy

Due to the limitation of the network environment, a file needs to be uploaded and downloaded from an inner network (cannot be directly connected to an external network) to an external FTP, and only an ftp reverse proxy can be erected on a gateway server; the gateway server can simultaneously connect the external network to the internal network; and an FTP user of the internal network is connected to the FTP proxy, and accesses an external real FTP server through the FTP proxy.

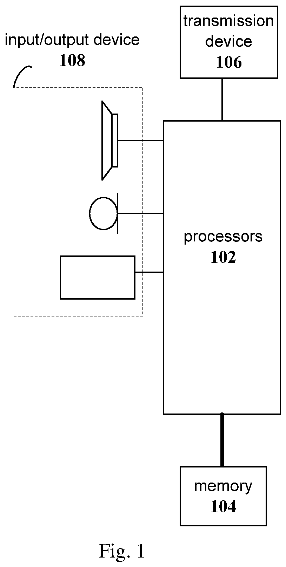

The method embodiments provided in the embodiments of the present invention can be executed in a mobile terminal, a computer terminal or a similar computing device. Taking the mobile terminal running as an example, Fig. 1 is a hardware structure block diagram of a mobile terminal for a data transmission method according to an embodiment of the present invention. As shown in Fig. 1, the mobile terminal may include one or more (only one is shown in Fig. 1) processors 102 (the processors 102 may include, but are not limited to, a microprocessor MCU or a processing apparatus such as a programmable logic device FPGA) and a memory 104 configured to store data, wherein the mobile terminal can further include a transmission device 106 configured to perform a communication function and an input/output device 108. A person of ordinary skill in the art may understand that the structure shown in Fig. 1 is merely exemplary, which does not limit the structure of the foregoing mobile terminal. For example, the mobile terminal may further include more or less components than shown in Fig. 1, or have a different configuration from that shown in Fig. 1.

The memory 104 may be configured to store a computer program, for example, a software program and a module of application software, such as a computer program corresponding to the data transmission method in the embodiments of the present invention; and the processor 102 runs the computer program stored in the memory 104, so as to execute various functional applications and data processing, that is, to implement the described data transmission method. Memory 104 may include high-speed random access memory, and may also include non-volatile memory, such as one or more magnetic storage devices, flash memory, or other non-volatile solid-state memory. In some instances, memory 104 may further include memory remotely located with respect to processor 102, which may be connected to mobile terminals over a network. Examples of such networks include, but are not limited to, the Internet, intranets, local area networks, mobile communication networks, and combinations thereof.

The transmitting device 106 is configured to receive or transmit data via one network. Specific examples of the described network may include a wireless network provided by a communication provider of the mobile terminal. In an example, the transmitting device 106 may comprise a Network Interface Controller (NIC) that may be coupled to other network devices via a base station to communicate with the Internet. In an example, the transmission device 106 can be a Radio Frequency (RF) module configured to communicate with the Internet wirelessly.

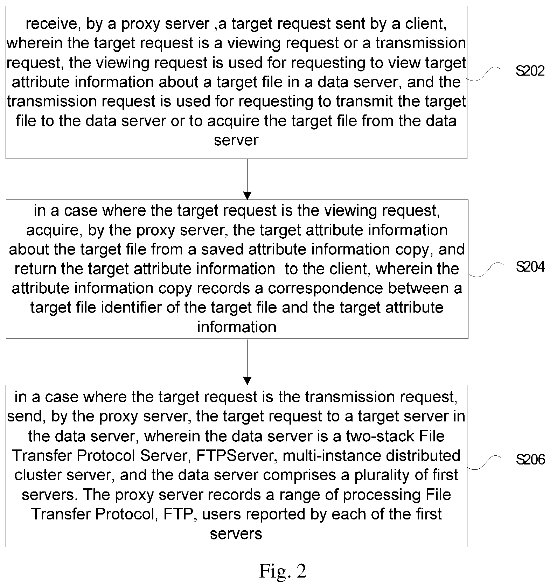

Provided is a data transmission method. Fig. 2 is a flowchart of a data transmission method according to an embodiment of the present invention. As shown in Fig. 2, the method comprises the following steps:
Step S202, a proxy server receives a target request sent by a client, wherein the target request is a viewing request or a transmission request, the viewing request is used for requesting to view target attribute information about a target file in a data server, and the transmission request is used for requesting to transmit the target file to the data server or to acquire the target file from the data server;
Step S204, in the case where the target request is a viewing request, the proxy server acquires the target attribute information about the target file from a saved attribute information copy, and returns the target attribute information to the client, wherein the attribute information copy records a correspondence between a target file identifier of the target file and the target attribute information;
Step S206, in the case where the target request is a transmission request, the proxy server sending the target request to a target server in the data server, wherein the data server is a two-stack FTPServer multi-instance distributed cluster server, and the data server comprises a plurality of first servers. The proxy server records a range of processing FTP users reported by each of the first servers.

Before the proxy server receives the target request sent by the client, the method further includes: obtaining file identifiers of all the files in the data server and attribute information of all the files; saving the file identifiers of all the files and the attribute information of all the files in the data server into the attribute information copy.

Before the proxy server receives the target request sent by the client, the method further includes: obtaining a correspondence between a user identifier and the first server, wherein different user identifiers correspond to different first servers; saving the correspondence in a memory.

Wherein, in the case that the target request is a viewing request, acquiring the attribute information about the target file from an attribute information copy stored in the proxy server and returning the target attribute information to the client includes: acquiring the target file identifier of the target file in the target request; acquiring, from the attribute information copy, the target attribute information corresponding to the target file identifier; returning the target attribute information to the client.

In the case where the target request is a transmission request, before the sending the target request to the target server in the data server, the method further includes: acquiring a target user identifier of the client; searching for the target server corresponding to the target user identifier in a memory.

The step of searching for the target server corresponding to the target user identifier in a memory includes: when a plurality of servers corresponding to the target user identifier are found, selecting a server with the lowest load balance from the plurality of servers as the target server, or determining the target server from the plurality of servers by using a polling algorithm.

In the case that the target request is a transmission request, after the sending the target request to the target server in the data server, the method further includes: establishing a data transmission channel between the client and the target server; and transmitting the target file between the client and the target server through the data transmission channel.

Before the proxy server receives the target request sent by the client, the method further includes: in the case where the file size of the attribute information copy is smaller than a predetermined threshold, saving the attribute information copy in a memory; when the file size of the attribute information copy is greater than or equal to a predetermined threshold value, saving the attribute information copy in a memory.

In the case where the target request is a transport request, before the sending, by the proxy server, the target request to the target server in the data server, the method further includes: forming a one-stack structure by using a plurality of FTPServer instances located on a same first server; forming a two-tier stack structure using a plurality of the first servers to obtain the data server.

After the data server is obtained by using a plurality of first servers to form a two-tier stacking structure, the method further includes: mounting a plurality of FTPServer instances on a same first server on a same LUN high-speed storage.

By means of the embodiments of the present invention, during a transmission process of a file, a proxy server can schedule the file, a viewing request can directly return target attribute information via the proxy server, and the transmission request can be sent to different target servers for processing; therefore, the problem of low file transmission efficiency can be solved, and the effect of improving the file transmission efficiency can be achieved.

The present invention will be described below with reference to specific examples.

The proxy server in the embodiment of the present invention may be an ftp reverse proxy server. The first server may be a server node, and an FTP SERVER instance (an FTPServer micro-service) runs on the server node. The plurality of first servers form a two-stack structure and constitute a data server.

### FTP reverse proxy FTPProxy offload addressing

The FTPProxy reverse proxy is an implementation of a meta-language layer of the FTP protocol, and is a standard FTP server for the client, but many actual file operation requests are transferred to the back-end FTPServer micro-service cluster for processing. The reverse proxy of the FTPProxy in the embodiment of the present invention focuses on local offload and combines with the two-stack addressing design of the FTPServer.

First, a reverse proxy is introduced. The reverse proxy is used for shielding differences between clients caused by a plurality of FTPServer distributed instances at a rear end and cooperating with shunting addressing. An FTP client does not need to pay attention to the number of FTPServer instances, every instance runs at what server nodes, what the address of each instance is, whether a certain instance is stopped, and other details. The FTP client does not directly request the FTPServer micro-service, but is connected to the FTPProxy, which acts as a proxy of the FTPServer to provide the FTP protocol capability. The FTPProxy provides a monitoring station, which can check the state of the FTPProxy itself, all the current FTP connection information, and the information and state of all the server nodes and FTPServer instances at the backend.

The FTP reverse agent can classify the FTP requests into two types by analyzing the FTP requests:
Viewing request: file view type request, such as: LIST, NLST, PWD, STAT. This type of request is mainly to view the file information of the file system level.

Transmission request: a file operation and file transmission type request, and other requests except the view type request, such as RETR, STOR, DELE, CWD, RNTO, etc. These requests are collectively referred to as file transfer type requests.

In order to relieve the pressure of the FTPServer and improve the response efficiency of the file viewing type request, a shunting capability may be provided in the reverse proxy server FTPProxy.

After receiving the request from the client, the FTPProxy determines the type of the request, and if the request is a file viewing type request, the request is directly processed locally, and no longer transmitted to the FTPServer at the rear end. To support processing of a file viewing type request in an FTPProxy, a back-end FTPServer file directory tree and a copy of attribute information need to be maintained in the FTPProxy. Because the single server node where each FTPServer is located at the rear end shares the local file system, for the same server node, the file tree information does not need to be combined in the FTPProxy. Since the local file systems of the server nodes are not shared and are independent of each other, the FTPProxy needs to maintain a directory tree for all server nodes in which the FTPServers are located by taking server nodes as a unit. With a subsequent FTP action, the file system content of the FTPServer may change, and the local cache of the FTPServer needs to be updated synchronously. Since all FTP requests pass through the FTPProxy reverse proxy, the changes may be performed in the directory tree maintained by the FTPServer at the same time, and the consistency with the file system content of the backend FTPServer is maintained.

In order to improve efficiency, directory tree information maintained by an FTPProxy may be stored in a memory, and if a back-end FTPServer holds too many files, this part of information may be persisted to the memory, so as to relieve a memory pressure.

With regard to a file transmission type request, after arriving at a proxy, a client and an FTPServer instance subsequently directly establish a file transmission channel; and the file transmission directly and directly transmitted without passing through the proxy, thereby reducing one-time forwarding of an FTPProxy, preventing the FTPProxy from becoming a bottleneck, and further improving the efficiency.

The FTPProxy is responsible for distributing FTP requests to a plurality of FTPServer micro-service instances at the back-end. According to a two-stack design of FTPServers, FTP users supported by each FTPServer instance are in a certain range; therefore, an FTPProxy needs to determine, according to an FTP user that is currently connected and logged in, which FTPServer instance is to be addressed to a rear end. Certainly, there may be a plurality of such instances. In this case, allocation requests may be further balanced according to load conditions of the FTPServers, so as to maximize efficiency. A Round-Robin polling algorithm may also be used, which is simple and efficient.

With the trend of convergence of cloud networks in a 5G intelligent network, microservice architecture is used for operation and maintenance management, network management, and the like, and multi-instance expansion has become a basic requirement of a cloud native to each service component, so as to better support distributed, high concurrent and large-scale, and a dual cluster system HA. Hence, in this solution, the FTPServer, as a file transfer service component, is implemented in a form of a micro-service container, and supports multi-instance running. In addition, in order to improve the file transmission efficiency, a local high-efficiency storage logical unit number LUN is shared with a server node FTPServer instance, and multiple server nodes are stacked to form an entire FTP distributed cluster system, thereby meeting a high concurrent and high-efficiency file transmission requirement.

The number of FTP concurrent connections supported by a single instance FTPServer is limited, and the capability of the FTP concurrent connection cannot be increased without an upper limit along with the vertical expansion of a resource. Because the processing capability has an upper limit due to thread scheduling, lock waiting and the like inside a single instance, about 1000 concurrent connections generally reach the top, and the allocation of an expanded resource cannot be improved. Hence, in order to support more concurrent connections, an FTP server cluster needs to be implemented.

The embodiments of the present invention design that an FTPServer operates in a container manner, so as to satisfy cloud native requirements, support multi-instance expansion and support elasticity, and can pop up a plurality of instances to operate according to configuration, loads, such as the number of connections and the activity degree of the connections, and usage conditions of a CPU and a memory. One server node may run a plurality of FTPServer instances, and a plurality of server nodes may be deployed. In this way, a plurality of FTPServer instances constitute an FTP distributed cluster, and a container management system, such as the K8s, manages a life cycle thereof, thereby realizing allocation scheduling and HA.

The same server node FTPServer instance shares the locally stored Magnetic LUNs mounted therein

The biggest problem to be solved by an FTP server cluster is the consistency of a file system, and a plurality of FTPServer instances need to see completely consistent file views, so that a file is uploaded and downloaded, and a correct service can be ensured only when a file operation is performed. In order to ensure such consistency, no matter the file copying mode or the distributed file system mode, the efficiency problem is the most prominent problem, and the increased IO and conflict inside the cluster greatly reduce the file transmission efficiency. Embodiments of the present invention address this issue.

In order to solve the consistency of a file system, an FTPServer instance of the same server is designed to share a locally stored Magnetic LUN, and a distributed coordination mechanism is used to solve a file access conflict, so that the FTPServer instance of the same server sees a unified file system view. This approach supports efficient file transfer with efficient IO of the Magnetic LUN. it is required that the corresponding FTPServer instance runs on the same server node, and the resource allocation of the server node is used to support multiple FTPServer instances. For example, a resource requirement is 1 C2G (1 core CPU, 2G memory) when a single FTPServer instance has an upper capability limit. At present, a high-profile server can basically achieve a configuration of 100C300G, that is, the same server node can support a horizontal expansion of 100 FTPServer instances to achieve a support capability of 100 thousand FTP concurrent connections.

Multiple instances of an FTPServer running on a single server node form an FTP server cluster, but due to the limitation of server node configuration, the processing capability of the cluster also has an upper limit, limiting the support scale of the distributed FTP server cluster to some extent. Hence, it is necessary to break the restriction of a single server node and use a plurality of server nodes. However, a locally stored disk LUN cannot be accessed efficiently across a plurality of server nodes, otherwise, an NFS-like distributed file system must be constructed, and an efficiency problem may occur.

In conjunction with the service features of the FTP, the main working directory of a certain particular FTP user is determined, and files in different main working directories do not have intersection, that is, the operation of the FTP on the files is always limited in the main working directory of this user, so that the main working directory of a certain FTP user can be bound to a certain fixed server node, and different main working directories of other FTP users are bound to other server nodes. In this way, different server nodes process different main working directories, and there is no requirement for sharing a view of a file among multiple server nodes. The basis of the division herein is a main working directory of an FTP user rather than an FTP user, because different FTP users may point to the same working directory. The final effect is that a specific working directory exists only on a specific server node.

Correspondence between a main working directory of each FTP user and a server node is divided in advance, and a certain server node contains which working directories. Thus, a file transfer request of a corresponding FTP user can be processed, and a relationship between a server node and the FTP user is finally formed. All requests of a certain FTP user are processed by a fixed server node (multiple FTPServer instances). The cluster capability may be supported for the user by using the locally-stored Magnetic LUNs and a plurality of FTPServer instances running on the server node. In this way, the FTPServers are divided into many types, and the FTP user directories processed by a certain type of FTPServer (a plurality of instances) are determined, do not cross other FTPServers, and run on a fixed server node.

According to the foregoing resource estimation, a single user running on a single server node can reach the capacity of the order of 100,000 concurrent connections, and different services generally use different FTP users; therefore, in combination with the multi-server node expansion in the present solution, the entire system can provide a higher order of concurrent support capability.

In the embodiments of the present invention, different server nodes can process different FTP users in different scopes, and a specific instance of an FTPServer can only run at a specific server node and be contracted at this node. This requires the use of a label mechanism of the container management system K8s by which the server node at which the FTPServer instance runs can be scheduled. Each server node is tagged with a tag, and at the same time a tag of a certain type of FTPServer is configured, so as to control an instance thereof to run on a server node of a corresponding tag. Other FTPServers with different working directory ranges may be configured with other labels to control the instances thereof to run on other server nodes of the corresponding labels.

According to the solutions mentioned in the embodiments of the present invention, only one server node can be used corresponding to a label that can run on an instance of a certain kind of FTPServer to use a locally stored Magnetic LUNs. However, once the server node fails, the HA cannot be ensured, and therefore the number of server nodes corresponding to a certain label must be greater than 1. However, it needs to be ensured that all the same type of FTPServer instances can only be dispatched to the same server node, and this requires the affinity policy of the container management system K8s, and the affinity means that once a first instance of a certain type of FTPServer is dispatched to a certain server node according to a label rule, other instances of the same type of FTPServer will be dispatched to the same server node subsequently, even if there are a plurality of server nodes with the same label. In this way, it is ensured that all the same kind of FTPServer instances run on the same server node and share the locally stored Magnetic LUNs, and at the same time, the HA is ensured. When a certain server node is offline, all the FTPServer instances of the server node are entirely switched to a certain other server node complying with the label rule, and the Magnetic LUNs are also hooked to the new server node.

Because all the FTPServer instances of the same server node read from or write to the same LUN in the same disk array, a distributed coordination mechanism is required to coordinate IO operations of these FTPServer instances without conflicting with each other. It is mainly that reading and writing of the same file do not conflict with each other, and at the same time, only one FTPServer instance can perform a write operation on the same file, and the write cannot be read at the same time, and other restrictions are not imposed. Multiple threads in the same FTPServer instance are controlled by using memory locks without distributed coordination.

The distributed coordination mechanism is realized by a distributed lock across containers. When a file is written, a corresponding lock is generated according to a file name, and is released after writing is completed. All other read-write actions check whether the lock exists. If the lock exists, other read-write actions for the file are not allowed.

The distributed coordination is a distributed lock implemented based on a temporary file and file ordering, and the lock cannot be re-entered. When applying for a lock, a temporary directory is generated for each lock, corresponding to a specific file to be read and written in coordination; in this directory, each FTPServer instance to apply for a lock generates a temporary file according to its container ID, and performs locking; and a judgement is performed before and after locking, and if a plurality of containers are applied for at the same time (a plurality of temporary files are also present), a container with successful locking is selected according to a file name sorting fixed algorithm. The objective that only one container acquires the lock is finally achieved, thereby implementing distributed coordination.

By means of the method in the embodiments of the present invention, compared with the prior art, responding to a file viewing type operation is faster, and massive FTP concurrent connections can be supported. Meanwhile, in the case of massive FTP connections, since there is no file replication or a network file system, the IO inside an FTP server cluster is effectively reduced, and the file transmission efficiency is improved.

By means of an FTPProxy reverse proxy offload addressing of a back-end multi-FTPServer instance, a file transmission type request skips direct connection and direct transmission of a proxy, thereby improving the file transmission efficiency. In conjunction with an FTPService feature, a two- stack FTPServer multi-instance distributed cluster (a data server) is designed, and a same type of FTPServer instances can share a local magnetic array LUN for efficient storage by using an affinity policy and distributed coordination, thereby further improving the efficiency of file uploading and downloading.

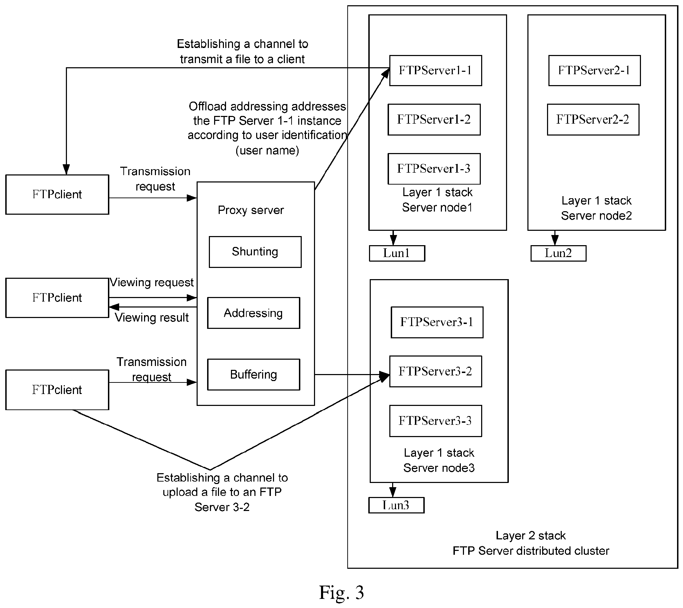

As shown in Fig. 3, Fig. 3 is a schematic diagram of the architecture and flow of a data transmission method according to an embodiment of the present invention. The FTPProxy may be deployed at a gateway, act as a reverse proxy, and cooperate to address a back-end FTPServer instance. When the first generated FTPServer instance on each server node is started, the working directory tree information in the local LUN is delivered to the FTPProxy to be cached, so that the FTPServer can quickly respond to the file viewing type request. The FTPProxy maintains working directory trees of all LUNs, and dynamically updates the working directory tree with a subsequent FTP operation. Meanwhile, the FTPProxy provides a monitoring station to collect various information and states of the FTP distributed cluster system. It can check the state of the FTPProxy itself, all the current FTP connection information, and the information and state of all the ServerNode and FTPServer instances at the backend.

The client FTPClient connects to the FTPProxy first to perform FTP user authentication, and the FTPProxy records the FTP user information corresponding to each FTP connection. When a subsequent file transfer type request is initiated, an FTP Server instance corresponding to the user is identified, and a file transfer channel is directly established between the FTPClient and the FTPServer instance for subsequent file transfer.

Each instance forming the distributed cluster of the FTPServer operates on a corresponding ServerNode of the Server node according to a label rule, the server node is mounted with a corresponding Magnetic LUNs, and a working directory range thereof determines a range of an FTP user which can be served. The FTPServer instances on the same server node form a one-stack, and a plurality of server nodes form a two-stack, thereby forming a distributed entire FTPServer cluster. A high concurrent connection may serve multiple FTP users.

An FTPServer instance runs on a ServerNode by using a micro-service in a container form. All FTPServer containers on the same ServerNode mount the same magnetic array LUN high-speed storage. By means of distributed coordinated shared access, efficient IO is used to improve the file transmission efficiency. Thus, the purpose of high concurrency and high efficiency design of the present invention is achieved.

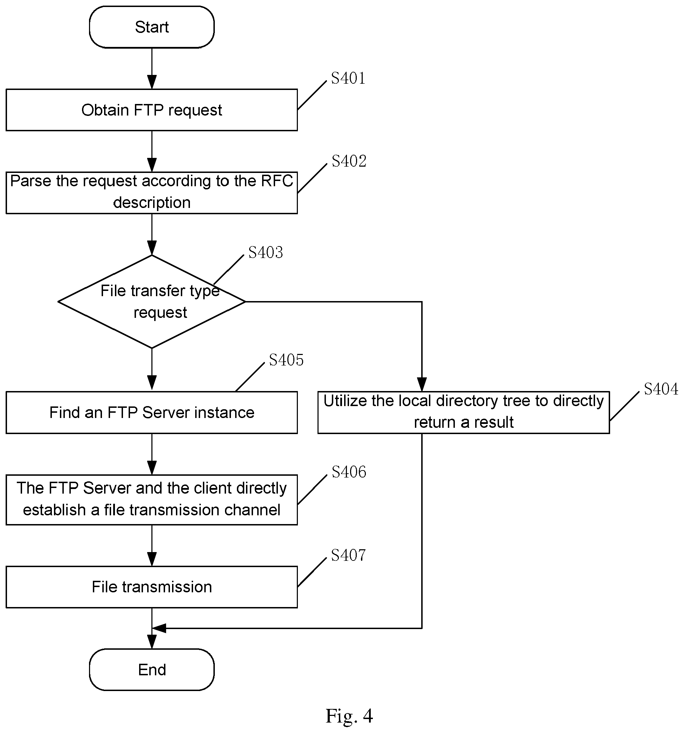

As shown in Fig. 4, Fig. 4 is a flowchart of FTPProxy distribution and addressing
S401, an FTP request arrives at an FTPProxy;
S402, the FTPProxy parses out the request according to the FTP RFC protocol description;
S403, if it is determined that the request is a file transfer type request, proceed to step S405; otherwise, S404, directly responding with the local cache information;
S405, a corresponding FTPServer instance is searched according to the current FTP user information; if a plurality of FTPServer instances exist, an appropriate FTPServer instance may be addressed according to a load balancing algorithm or a Round-Robin polling algorithm;
S406, a direct file transfer channel is established between the FTPClient and the FTPServer instance;
S407, a file transmission is performed (uploading or downloading).

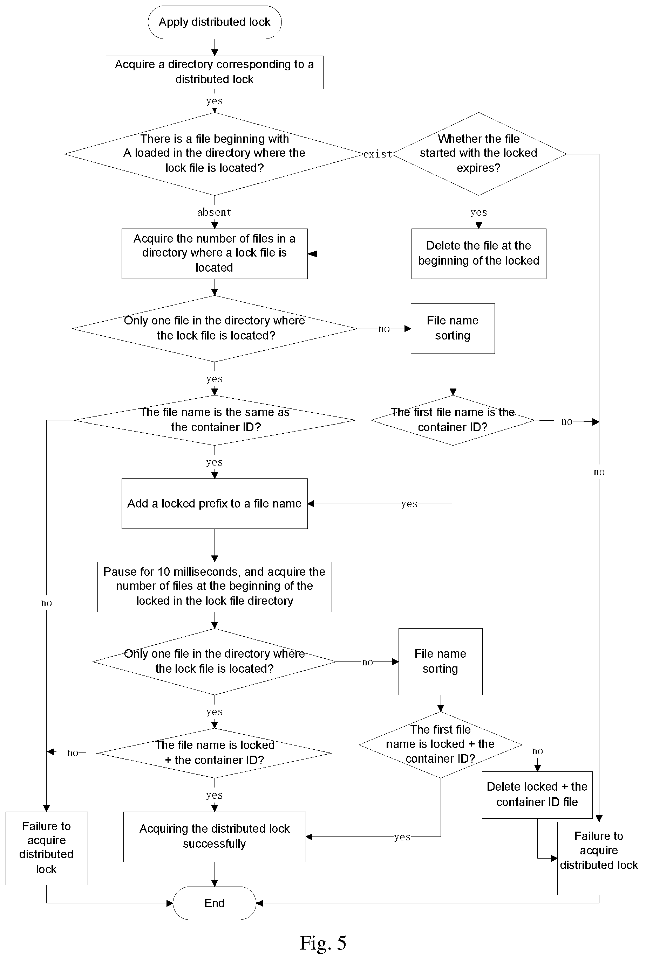

As shown in Fig. 5, Fig. 5 is a flowchart of a distributed coordination algorithm.

Multiple FTPServer container instances of the same server node need to realize that reading and writing of the same file do not conflict with each other, and at the same time, only one FTPServer instance can perform a write operation on the same file, and the write operation cannot be performed at the same time, which is realized by cross-container distributed locks. The specific distributed lock algorithm is as follows:

### Precondition:

The same directory clusterlocks is used as the temporary directory of the distributed lock in the FTPServer container of the same server node.

All distribution locks provide a key word (or a file path), and the key word is represented by a hexadecimal code; each lock establishes a unique directory with this key word under clusterlocks; a file is established in the directory according to a container ID for applying for a lock; in this way, a unique temporary file clusterlocks/<lock key word >/<container ID>

In order to prevent abnormal exit after the container applies for a lock, each lock has an expiration time of 60s (determining whether the lock expires according to the last modification time of the file)

Application distributed lock flow:
1. a directory corresponding to a file lock is acquired;
2. Check whether there is a file with a looked in the lock directory (clusterlocks/< lock keyword >), and if not, go to Step 4. If the locked file does not expire, it indicates that the lock has been acquired, and acquiring the lock fails;
3. If the locked file expires, deleting the locked file;
4. Whether there is only one file under the directory, if yes, go to Step 5. If not, sorting the plurality of files, and then determining whether the first file name is the container ID of the container, and if the first file name is not the container ID of the container, the obtaining of the lock fails, and if the first file name is the container ID of the container, go to Step 6;
5. Whether the file name of this file is the container ID of this container, and if the file name of this file is not the container ID of this container, the obtaining of the lock fails, and if the file name of this file is the container ID of this container, the process proceeds;
6. a locked prefix is added to the file name;
7. Sleep10ms, confirming whether the file is a unique locked file again, if not, going to step 8; if so, confirming again whether the name of the lock file is: locked + the container ID; if so, successfully acquiring the lock; otherwise, unsuccessfully acquiring the lock;
8. If there are a plurality of locked files, sorting is performed again, a container corresponding to a first file name acquires a lock, and other containers fail to acquire the lock and clean up files generated by themselves.
9. End the flow.

In the above flow, after the program acquires the distributed lock, if the usage time is longer than 60s, the last modification time of the lock file needs to be updated in the usage process.

As shown in Table 1 below, a distributed FTPServer cluster is instantiated

**Table 1**

| FTPServer Type | FTP-A | FTP-B | FTP-C |
|---|---|---|---|
| Processed user | user-A1 | user-B1 | user-C1 |
| | user-A2 | user-B2 | user-C3 |
| | user-A3 | | user-C2 |
| | | | user-C4 |
| FTPServer instance | FTPServer-A-1 | FTPServer-B-1 | FTPServer-C-1 |
| | FTPServer-A-2 | FTPServer-B-2 | FTPServer-C-2 |
| | FTPServer-A-3 | | FTPServer-C-3 |
| LUN | LUN-A | LUN-B | LUN-C |
| Server node | ServerNode-A | ServerNode-B | ServerNode-C |
| Server node tag | FTP-A, FTP-C | FTP-A, FTP-B | FTP-B, FTP-C |

The system has three server nodes: ServerNode-A, ServerNode-B and ServerNode-C.

The ServerNode-A labels: "FTP-A" and "FTP-C", indicating that two types of FTPServer instances, "FTP-A" and "FTP-C" may be running; the ServerNode-B labels "FTP-A", "FTP-B", and the ServerNode-C labels "FTP-B", "FTP-C".

There are three types of FTP Server instances: FTP-A, FTP-B, FTP-C. The FTP-A may serve FTP users user-A1, user-A2, user-A3; a LUN of a magnetic array where a working directory corresponding thereto is located is a LUN-A; FTP-A is configured with 3 running instances: FTPServer-A-1 , FTPServer-A-2, FTPServer-A-3. The FTP-A can only run on the server node with the label "FTP-A", i.e., the ServerNode-A or ServerNode-B.

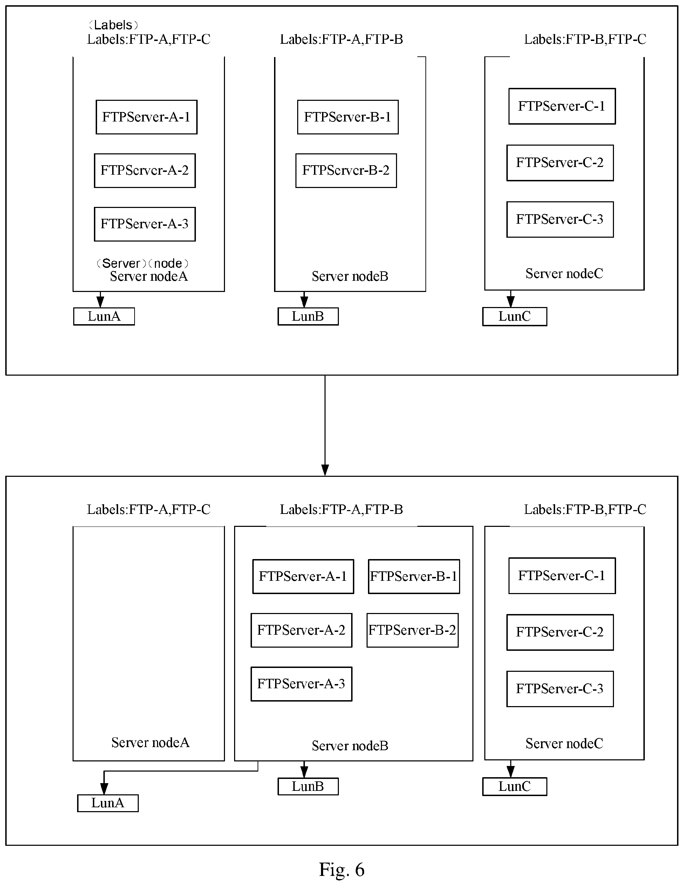

Fig. 6 is a schematic diagram of an optional distributed FTP cluster affinity and HA.

Due to the affinity principle:
All FTPServer instances such as FTP-A: FTPServer-A-1, FTPServer-A-2, and FTPServer-A-3 run on the ServerNode-A with the label of FTP-A, and the corresponding magnetic array LUN-A is also mounted on the ServerNode-A.

All FTPServer instances such as FTP-B: FTPServer-B-1 and FTPServer-B-2 run on the ServerNode-B with the label of FTP-B, and the corresponding magnetic array LUN-B is also mounted on the ServerNode-B.

All FTPServer instances such as FTP-C: FTPServer-C-1, FTPServer-C-2, and FTPServer-C-3 run on the ServerNode-C with the label of FTP-C, and the corresponding magnetic array LUN-C is also mounted on the ServerNode-C

At this time, if the system is abnormal and the ServerNode-A is down, the cluster management system K8s finds that all the FTP Server instances of the FTP-A class originally run on the ServerNode-A: FTPServer-A-1, FTPServer-A-2, and FTPServer-A-3. According to the label principle, the server node ServerNode-B capable of running the FTP-A class instance is found (because the server node ServerNode-B has a label "FTP-B"), then the corresponding disk LUN-A is first mounted onto the server Node-B, and then all the FTP-A class instances: FTPServer-A-1 , FTPServer-A-2, FTPServer-A-3 to the ServerNode-B are entirely switched to run. In this case, the server Node-B runs two types of FTP Server instances, i.e. FTP-B and FTP-A, at the same time, and the LUN-B and LUN-A are mounted at the same time.

In this way, after switching, the operation mode satisfies the label and affinity strategy, and a corresponding local magnetic array LUN can be used, and when an exception occurs, an HA can be achieved.

As shown in Fig. 6, after the ServerNode-A node is down, the instances FTPServer-A-1, FTPServer-A-2 and FTPServer-A-3 are integrally migrated to the ServerNode-B node for running, and Lun-A is mounted to the ServerNode-B node during the cluster migration.

File Transfer Protocol (FTP) is a standard protocol for file transmission on a network, and a Logical Unit Number (LUN) is an independent storage unit that can be directly identified by a server.

Through the description of the foregoing embodiments, a person skilled in the art may clearly understand that the method according to the foregoing embodiments may be implemented by software in addition to a necessary universal hardware platform, and definitely may also be implemented by hardware. However, in many cases, the former is a preferred implementation. Based on such understanding, the technical solutions of the present invention essentially or the part contributing to the prior art may be embodied in the form of a software product. The computer software product is stored in a storage medium (such as a ROM/RAM, a magnetic disk, and an optical disk), and includes several instructions for instructing a terminal device (which may be a mobile phone), a computer, a server, a network device, or the like.

The embodiment further provides a data transmission device, which is configured to implement the described embodiment and example implementation mode, and what has been described will not be elaborated. The term "module", as used hereinafter, is a combination of software and/or hardware capable of realizing a predetermined function. Although the apparatus described in the following embodiment is preferably implemented by software, implementation of hardware or a combination of software and hardware is also possible and conceived.

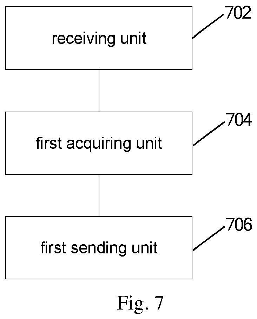

Fig. 7 is a structural block diagram of a proxy server according to an embodiment of the present invention. As shown in Fig. 7, the proxy server includes:
A receiving unit 702, configured to receive a target request sent by a client, wherein the target request is a viewing request or a transmission request, the viewing request is used for requesting to view target attribute information about a target file in a data server, and the transmission request is used for requesting to transmit the target file to the data server or acquiring the target file from the data server;
A first acquiring unit 704, configured to acquire the target attribute information of the target file from a stored copy of attribute information in the case where the target request is a viewing request, and return the acquired target attribute information to the client, wherein the copy of attribute information records a correspondence between a target file identifier of the target file and the target attribute information;
A first sending unit 706, configured to send the target request to a target server in the data server in the case that the target request is a transmission request, wherein the data server is a two-stack FTP Server multi-instance distributed cluster server, and the data server comprises a plurality of first servers. The proxy server records a range of processing FTP users reported by each of the first servers.

By means of the described proxy server, in a file transmission process, a file can be scheduled by means of the proxy server, a viewing request can directly return target attribute information via the proxy server, and the transmission request can be sent to different target servers for processing; therefore, the problem of low file transmission efficiency can be solved, and the effect of improving the file transmission efficiency is achieved.

Embodiments of the present invention also provide a computer readable storage medium. The computer readable storage medium stores a computer program, wherein the computer program is configured to execute the steps in any one of the described method embodiments during running.

In an exemplary embodiment, the computer readable storage medium may include, but is not limited to, any medium that can store a computer program, such as a USB flash drive, a Read-Only Memory (ROM for short), a Random Access Memory (RAM for short), a removable hard disk, a magnetic disk, or an optical disc.

Embodiments of the present invention further provide an electronic apparatus, comprising a memory and a processor. The memory stores a computer program. The processor is configured to run the computer program to execute steps in any one of the method embodiments.

In an exemplary embodiment, the electronic apparatus can further comprise a transmission device and an input/output device, wherein the transmission device is connected to the processor, and the input/output device is connected to the processor.

For specific examples in this embodiment, reference may be made to the examples described in the foregoing embodiments and exemplary embodiments, and details are not repeatedly described in this embodiment.

Obviously, those skilled in the art should understand that each module or each step of the present invention can be implemented by a universal computing device. They can be centralized on a single computing device or distributed on a network composed of multiple computing devices, and can be realized by using program codes executable by the computing devices. Thus, they can be stored in a storage device and executed by the calculation device, and in some cases, the shown or described steps can be executed in a sequence different from that here, or they are made into integrated circuit modules respectively, or a plurality of modules or steps therein are made into a single integrated circuit module for implementation. As such, the present invention is not limited to any particular hardware and software combination.

## Claims

1. A data transmission method, comprising:
receiving (S202), by a proxy server, a target request sent by a client, wherein the target request is a viewing request or a transmission request, the viewing request is used for requesting to view target attribute information about a target file in a data server, and the transmission request is used for requesting to transmit the target file to the data server or to acquire the target file from the data server;
in a case where the target request is the viewing request, acquiring (S204), by the proxy server, the target attribute information about the target file from a saved attribute information copy, and returning the target attribute information to the client, wherein the attribute information copy records a correspondence between a target file identifier of the target file and the target attribute information; and
in a case where the target request is the transmission request, sending (S206), by the proxy server, the target request to a target server in the data server, wherein the data server is a two-stack File Transfer Protocol Server, FTPServer, multi-instance distributed cluster server, and the data server comprises a plurality of first servers, wherein the proxy server records a range of processing File Transfer Protocol, FTP, users reported by each of the first servers.

2. The method according to claim 1, wherein before the proxy server receives the target request sent by the client, the method further comprises:
obtaining file identifiers and attribute information of all the files in the data server;
saving the file identifiers and the attribute information of all the files in the data server into the attribute information copy.

3. The method according to claim 1, wherein before the proxy server receives the target request sent by the client, the method further comprises:
obtaining a correspondence between a user identifier and the first server, wherein different user identifiers correspond to different first servers;
saving the correspondence in a memory.

4. The method according to claim 1, wherein in the case that the target request is the viewing request, acquiring the attribute information of the target file from an attribute information copy stored in the proxy server and returning the attribute information to the client comprises:
obtaining the target file identifier of the target file in the target request;
acquiring, from the attribute information copy, the target attribute information corresponding to the target file identifier;
returning the target attribute information to the client.

5. The method according to claim 1, wherein in the case that the target request is the transmission request, before sending the target request to the target server in the data server, the method further comprises:
obtaining a target user identifier of the client;
searching for the target server corresponding to the target user identifier in a memory;
sending the transmission request to the target server.

6. The method according to claim 5, wherein the searching for the destination server corresponding to the target user identifier in the memory comprises:
in a case where a plurality of servers corresponding to the target user identifier are found, selecting a server with the lowest load balance from the plurality of servers as the target server, or determining the target server from the plurality of servers by using a polling algorithm.

7. The method according to claim 5, wherein in the case that the target request is the transmission request, after sending the target request to the target server in the data server, the method further comprises:
establishing a data transmission channel between the client and the target server; and
transmitting the target file between the client and the target server through the data transmission channel.

8. The method according to claim 1, wherein before the proxy server receives the target request sent by the client, the method further comprises:
in a case where a file size of the attribute information copy is less than a predetermined threshold, saving the attribute information copy in a memory;
in the case where the file size of the attribute information copy is greater than or equal to the predetermined threshold, saving the attribute information copy in a memory.

9. The method according to claim 1, wherein in the case that the target request is the transmission request, before the sending, by the proxy server, the target request to the target server in the data server, the method further comprises:
forming a one-stack structure using a plurality of FTPServer instances located on the same first server;
forming a two-stack structure using a plurality of the first servers to obtain the data server.

10. The method according to claim 9, wherein after the forming a one-stack structure by using a plurality of first servers to obtain the data servers, the method further comprises:
mounting the plurality of FTP Server instances on the same first server on a same Logic Unit Number ,LUN, high-speed storage.

11. A proxy server comprising:
a receiving unit (702), configured to receive a target request sent by a client, wherein the target request is a viewing request or a transmission request, the viewing request is used for requesting to view target attribute information about a target file in a data server, and the transmission request is used for requesting to transmit the target file to the data server or acquiring the target file from the data server;
a first acquiring unit (704), configured to, in a case where the target request is the viewing request, acquire the target attribute information about the target file from a saved attribute information copy, and return same to the client, wherein the attribute information copy records a correspondence between a target file identifier of the target file and the target attribute information;
a first sending unit (706), configured to send the target request to a target server in the data server in a case where the target request is a transmission request, wherein the data server is a two-stack FTPServer multi-instance distributed cluster server, and the data server comprises a plurality of first servers;
wherein the proxy server is configured to record a range of processing FTP users reported by each of the first servers.

12. A computer readable storage medium, wherein a computer program is stored in the computer readable storage medium, and the computer program is configured to execute the method as claimed in any one of claims 1 to 10 when running.

13. An electronic device, comprising a memory and a processor, wherein the memory stores a computer program, and the processor is configured to run the computer program so as to execute the method as claimed in any one of claims 1 to 10.

## Patentansprüche

1. Datenübertragungsverfahren, umfassend:
Empfangen (S202), durch einen Proxy-Server, einer Zielanforderung, die durch einen Client gesendet wird, wobei die Zielanforderung eine Ansichtsanforderung oder eine Übertragungsanforderung ist, die Ansichtsanforderung zum Anfordern der Ansicht von Zielattributsinformationen über eine Zieldatei in einem Datenserver verwendet wird, und die Übertragungsanforderung zum Anfordern der Übertragung der Zieldatei an den Datenserver oder zum Erfassen der Zieldatei von dem Datenserver verwendet wird;
in einem Fall, in dem die Zielanforderung die Ansichtsanforderung ist, Erfassen (S204), durch den Proxy-Server, der Zielattributsinformationen über die Zieldatei aus einer gespeicherten Kopie der Attributsinformationen und Zurückgeben der Zielattributsinformationen an den Client, wobei die Kopie der Attributsinformationen eine Übereinstimmung zwischen einer Zieldateikennung der Zieldatei und den Zielattributsinformationen aufzeichnet; und
in einem Fall, in dem die Zielanforderung die Übertragungsanforderung ist, Senden (S206), durch den Proxy-Server, der Zielanforderung an einen Zielserver in dem Datenserver, wobei der Datenserver ein Zweistapel-File-Transfer-Protocol-Server, FTP-Server, verteilter Cluster-Server mit mehreren Instanzen ist, und der Datenserver eine Vielzahl von ersten Servern umfasst, wobei der Proxy-Server einen Bereich von verarbeitenden File-Transfer-Protocol-Benutzern, FTP-Benutzern, aufzeichnet, der durch jeden der ersten Server gemeldet werden.

2. Verfahren nach Anspruch 1, wobei, bevor der Proxy-Server die Zielanforderung, die von dem Client gesendet wird, empfängt, das Verfahren ferner umfasst:
Erhalten von Dateikennungen und Attributsinformationen aller Dateien auf dem Datenserver;
Speichern der Dateikennungen und der Attributsinformationen aller Dateien auf der Kopie der Attributsinformationen.

3. Verfahren nach Anspruch 1, wobei, bevor der Proxy-Server die Zielanforderung, die von dem Client gesendet wird, empfängt, das Verfahren ferner umfasst:
Erhalten einer Entsprechung zwischen einer Benutzerkennung und dem ersten Server, wobei unterschiedliche Benutzerkennungen unterschiedlichen ersten Servern entsprechen;
Speichern der Entsprechung in einem Speicher.

4. Verfahren gemäß Anspruch 1, wobei in dem Fall, dass die Zielanforderung die Ansichtsanforderung ist, das Erfassen der Attributsinformationen der Zieldatei aus einer Kopie der Attributsinformationen, die in dem Proxy-Server gespeichert ist, und das Zurückgeben der Attributsinformationen an den Client umfasst:
Erhalten der Zieldateikennung der Zieldatei in der Zielanforderung;
Erfassen, aus der Kopie der Attributsinformationen, der Zielattributsinformationen, die der Zieldateikennung entsprechen;
Zurückgeben der Zielattributsinformationen an den Client.

5. Verfahren nach Anspruch 1, wobei in dem Fall, dass die Zielanforderung die Übertragungsanforderung ist, vor dem Senden der Zielanforderung an den Zielserver in dem Datenserver, das Verfahren ferner umfasst:
Erhalten einer Zielbenutzerkennung des Clients;
Suchen nach dem Zielserver, der der Zielbenutzerkennung in einem Speicher entspricht;
Senden der Übertragungsanforderung an den Zielserver.

6. Verfahren nach Anspruch 5, wobei das Suchen nach dem Zielserver, der der Zielbenutzerkennung in dem Speicher entspricht, umfasst:
in einem Fall, in dem eine Vielzahl von Servern gefunden werden, die der Zielbenutzerkennung entsprechen, Auswählen eines Servers mit der niedrigsten Lastverteilung aus der Vielzahl von Servern als Zielserver oder Bestimmen des Zielservers aus der Vielzahl von Servern durch Verwenden eines Abfragealgorithmus.

7. Verfahren nach Anspruch 5, wobei in dem Fall, dass die Zielanforderung die Übertragungsanforderung ist, nach dem Senden der Zielanforderung an den Zielserver in dem Datenserver, das Verfahren ferner umfasst:
Einrichten eines Datenübertragungskanals zwischen dem Client und dem Zielserver; und
Übertragen der Zieldatei zwischen dem Client und dem Zielserver über den Datenübertragungskanal.

8. Verfahren nach Anspruch 1, wobei, bevor der Proxy-Server die Zielanforderung, die von dem Client gesendet wird, empfängt, das Verfahren ferner umfasst:
in einem Fall, in dem eine Dateigröße der Kopie der Attributsinformationen kleiner als ein vorherbestimmter Schwellenwert ist, Speichern der Kopie der Attributsinformationen in einem Speicher;
in dem Fall, dass die Dateigröße der Kopie der Attributsinformationen größer oder gleich dem vorherbestimmten Schwellenwert ist, Speichern der Kopie der Attributsinformationen in einem Speicher.

9. Verfahren nach Anspruch 1, wobei in dem Fall, dass die Zielanforderung die Übertragungsanforderung ist, vor dem Senden, durch den Proxy-Server, der Zielanforderung an den Zielserver in dem Datenserver, das Verfahren ferner umfasst:
Ausbilden einer Einstapel-Struktur unter Verwendung einer Vielzahl von FTP-Server-Instanzen, die sich auf demselben ersten Server befinden;
Ausbilden einer Zweistapel-Struktur unter Verwendung einer Vielzahl der ersten Server, um den Datenserver zu erhalten.

10. Verfahren nach Anspruch 9, wobei nach dem Ausbilden einer Einstapel-Struktur durch Verwenden einer Vielzahl von ersten Servern, um die Datenserver zu erhalten, das Verfahren ferner umfasst:
Montieren der Vielzahl von FTP-Serverinstanzen auf demselben ersten Server auf einem Hochgeschwindigkeitsspeicher mit derselben Logic Unit Number, LUN.

11. Proxy-Server, umfassend:
eine Empfangseinheit (702), die konfiguriert ist, um eine Zielanforderung, die durch einen Client gesendet wird, zu empfangen, wobei die Zielanforderung eine Ansichtsanforderung oder eine Übertragungsanforderung ist, die Ansichtsanforderung zum Anfordern der Ansicht von Zielattributsinformationen über eine Zieldatei in einem Datenserver verwendet wird, und die Übertragungsanforderung zum Anfordern der Übertragung der Zieldatei an den Datenserver oder zum Erfassen der Zieldatei von dem Datenserver verwendet wird;
eine erste Erfassungseinheit (704), die konfiguriert ist, um in einem Fall, in dem die Zielanforderung die Ansichtsanforderung ist, die Zielattributsinformationen über die Zieldatei aus einer gespeicherten Kopie der Attributsinformationen zu erfassen, und diese an den Client zurückzugeben, wobei die Kopie der Attributsinformationen eine Entsprechung zwischen einer Zieldateikennung der Zieldatei und den Zielattributsinformationen aufzeichnet;
eine erste Sendeeinheit (706), die konfiguriert ist, um die Zielanforderung an einen Zielserver in dem Datenserver in einem Fall, in dem die Zielanforderung eine Übertragungsanforderung ist, zu senden, wobei der Datenserver ein Zweistapel-FTP-Server, verteilter Cluster-Server mit mehreren Instanzen ist, und der Datenserver eine Vielzahl von ersten Servern umfasst;
wobei der Proxy-Server konfiguriert ist, um einen Bereich von verarbeitenden FTP-Benutzern aufzuzeichnen, der durch jeden der ersten Server gemeldet werden.

12. Computerlesbares Speichermedium, wobei ein Computerprogramm in dem computerlesbaren Speichermedium gespeichert ist, und das Computerprogramm konfiguriert ist, um das Verfahren nach einem der Ansprüche 1 bis 10 während des Ablaufens auszuführen.

13. Elektronische Vorrichtung, umfassend einen Speicher und einen Prozessor, wobei der Speicher ein Computerprogramm speichert und der Prozessor konfiguriert ist, um das Computerprogramm ablaufen zu lassen, um das Verfahren nach einem der Ansprüche 1 bis 10 auszuführen.

## Revendications

1. Procédé de transmission de données, comprenant :
la réception (S202), par un serveur mandataire, d'une demande de cible envoyée par un client, dans lequel la demande de cible est une demande de visualisation ou une demande de transmission, la demande de visualisation est utilisée pour demander la visualisation d'informations d'attributs de cible concernant un fichier cible dans un serveur de données, et la demande de transmission est utilisée pour demander la transmission du fichier cible au serveur de données ou l'acquisition du fichier cible à partir du serveur de données ;
dans le cas où la demande de cible est la demande de visualisation, l'acquisition (S204), par le serveur mandataire, des informations d'attributs de cible concernant le fichier cible à partir d'une copie des informations d'attributs sauvegardée, et le renvoi des informations d'attributs de cible au client, dans lequel la copie des informations d'attributs enregistre une correspondance entre un identifiant de fichier cible du fichier cible et les informations d'attributs de cible ; et
dans le cas où la demande de cible est la demande de transmission, l'envoi (S206), par le serveur mandataire, de la demande de cible à un serveur cible dans le serveur de données, dans lequel le serveur de données est un serveur de grappe distribuée multi-instances de protocole de transfert de fichiers, FTPServer, à deux piles, et le serveur de données comprend une pluralité de premiers serveurs, dans lequel le serveur mandataire enregistre une plage d'utilisateurs du protocole de transfert de fichiers de traitement, FTP, signalée par chacun des premiers serveurs.

2. Procédé selon la revendication 1, dans lequel, avant que le serveur mandataire ne reçoive la demande de cible envoyée par le client, le procédé comprend en outre :
l'obtention des identifiants de fichiers et des informations d'attributs de tous les fichiers dans le serveur de données ;
la sauvegarde des identifiants de fichiers et des informations d'attributs de tous les fichiers dans le serveur de données dans la copie des informations d'attributs.

3. Procédé selon la revendication 1, dans lequel, avant que le serveur mandataire ne reçoive la demande de cible envoyée par le client, le procédé comprend en outre :
l'obtention d'une correspondance entre un identifiant d'utilisateur et le premier serveur, dans lequel les différents identifiants d'utilisateur correspondent à différents premiers serveurs ;
la sauvegarde de la correspondance dans une mémoire.

4. Procédé selon la revendication 1, dans lequel, dans le cas où la demande de cible est la demande de visualisation, l'acquisition des informations d'attributs du fichier cible à partir d'une copie d'informations d'attributs stockée dans le serveur mandataire et le renvoi des informations d'attributs au client comprennent :
l'obtention de l'identifiant de fichier cible du fichier cible dans la demande de cible ;
l'acquisition, à partir de la copie des informations d'attributs, les informations d'attributs de cible correspondant à l'identifiant de fichier cible ;
le renvoi au client des informations d'attributs de cible.

5. Procédé selon la revendication 1, dans lequel, dans le cas où la demande de cible est la demande de transmission, avant l'envoi de la demande de cible au serveur cible dans le serveur de données, le procédé comprend en outre :
l'obtention d'un identifiant d'utilisateur cible du client ;
la recherche du serveur cible correspondant à l'identifiant d'utilisateur cible dans une mémoire ;
l'envoi de la demande de transmission au serveur cible.

6. Procédé selon la revendication 5, dans lequel la recherche du serveur de destination correspondant à l'identifiant d'utilisateur cible dans la mémoire comprend :
dans le cas où une pluralité de serveurs correspondant à l'identifiant d'utilisateur cible est trouvée, la sélection d'un serveur ayant l'équilibre de charge le plus faible parmi la pluralité de serveurs en tant que serveur cible, ou la détermination du serveur cible parmi la pluralité de serveurs à l'aide d'un algorithme d'interrogation.

7. Procédé selon la revendication 5, dans lequel, dans le cas où la demande de cible est la demande de transmission, après l'envoi de la demande de cible au serveur cible dans le serveur de données, le procédé comprend en outre :
l'établissement d'un canal de transmission de données entre le client et le serveur cible ; et
la transmission du fichier cible entre le client et le serveur cible à travers le canal de transmission de données.

8. Procédé selon la revendication 1, dans lequel, avant que le serveur mandataire ne reçoive la demande de cible envoyée par le client, le procédé comprend en outre :
dans le cas où une taille de fichier de la copie des informations d'attributs est inférieure à un seuil prédéterminé, la sauvegarde de la copie des informations d'attributs dans une mémoire ;
dans le cas où la taille de fichier de la copie des informations d'attributs est supérieure ou égale au seuil prédéterminé, la sauvegarde de la copie des informations d'attributs dans une mémoire.

9. Procédé selon la revendication 1, dans lequel, dans le cas où la demande de cible est la demande de transmission, avant l'envoi, par le serveur mandataire, de la demande de cible au serveur cible dans le serveur de données, le procédé comprend en outre :
la formation d'une structure à une pile à l'aide d'une pluralité d'instances de FTPServer situées sur le même premier serveur ;
la formation d'une structure à deux piles à l'aide d'une pluralité des premiers serveurs pour obtenir le serveur de données.

10. Procédé selon la revendication 9, dans lequel après la formation d'une structure à une pile à l'aide d'une pluralité de premiers serveurs pour obtenir les serveurs de données, le procédé comprend en outre :
le montage de la pluralité d'instances de serveurs FTP sur le même premier serveur, sur un stockage à grande vitesse à même numéro d'unité logique, LUN.

11. Serveur mandataire comprenant :
une unité de réception (702), configurée pour recevoir une demande de cible envoyée par un client, dans lequel la demande de cible est une demande de visualisation ou une demande de transmission, la demande de visualisation est utilisée pour demander la visualisation d'informations d'attributs de cible concernant un fichier cible dans un serveur de données, et la demande de transmission est utilisée pour demander la transmission du fichier cible au serveur de données ou l'acquisition du fichier cible à partir du serveur de données ;
une première unité d'acquisition (704), configurée pour, dans le cas où la demande de cible est la demande de visualisation, acquérir les informations d'attributs de cible concernant le fichier cible à partir d'une copie d'informations d'attributs sauvegardée, et la renvoyer au client, dans lequel la copie d'informations d'attributs enregistre une correspondance entre un identifiant de fichier cible du fichier cible et les informations d'attributs de cible ;
une première unité d'envoi (706), configurée pour envoyer la demande de cible à un serveur cible dans le serveur de données dans le cas où la demande de cible est une demande de transmission, dans lequel le serveur de données est un serveur de grappe distribuée multi-instances FTPServer à deux piles, et le serveur de données comprend une pluralité de premiers serveurs ;
dans lequel le serveur mandataire est configuré pour enregistrer une plage d'utilisateurs FTP de traitement signalée par chacun des premiers serveurs.

12. Support de stockage lisible par ordinateur, dans lequel un programme d'ordinateur est stocké dans le support de stockage lisible par ordinateur, et le programme d'ordinateur est configuré pour exécuter le procédé selon l'une quelconque des revendications 1 à 10 lorsqu'il est en cours d'exécution.

13. Dispositif électronique, comprenant une mémoire et un processeur, dans lequel la mémoire stocke un programme d'ordinateur, et le processeur est configuré pour faire tourner le programme d'ordinateur de façon à exécuter le procédé selon l'une quelconque des revendications 1 à 10.
